(19) Europäisches Patentamt
European Patent Office
Office européen des brevets

(11) **EP 1 792 183 B1**

(12) **EUROPEAN PATENT SPECIFICATION**

(45) Date of publication and mention
of the grant of the patent:
**09.01.2008 Bulletin 2008/02**

(51) Int Cl.:
*G01N 15/00* (2006.01)   *G01N 21/49* (2006.01)

(21) Application number: **05790321.3**

(22) Date of filing: **16.09.2005**

(86) International application number:
**PCT/EP2005/009955**

(87) International publication number:
**WO 2006/032407 (30.03.2006 Gazette 2006/13)**

(54) **METHOD FOR MEASURING MOLECULAR INTERACTIONS BY LASER LIGHT SCATTERING (LLS)**

VERFAHREN ZUR MESSUNG MOLEKULARER WECHSELWIRKUNGEN MITTELS LASERLICHTSTREUUNG (LLS)

PROCEDE POUR MESURER DES INTERACTIONS MOLECULAIRES PAR DIFFUSION DE LA LUMIERE LASER (LLS)

(84) Designated Contracting States:
**AT BE BG CH CY CZ DE DK EE ES FI FR GB GR HU IE IS IT LI LT LU LV MC NL PL PT RO SE SI SK TR**

(30) Priority: **21.09.2004 IT MI20041800**

(43) Date of publication of application:
**06.06.2007 Bulletin 2007/23**

(73) Proprietor: **UNIVERSITA' DEGLI STUDI DI MILANO 20122 Milano (IT)**

(72) Inventors:
• **BELLINI, Tommaso**
**Universita' Degli Studi di Milano**
**I-20122 Milano (IT)**
• **GHETTA, Andrea**
**20121 Milano (IT)**
• **BUSCAGLIA, Marco**
**Universita' Degli Studi Di Milano**
**I-20122 Milano (IT)**

(74) Representative: **Minoja, Fabrizio**
**Bianchetti Bracco Minoja S.r.l.**
**Via Plinio, 63**
**20129 Milano (IT)**

(56) References cited:
EP-A- 0 263 731          WO-A-00/09539
WO-A-94/00763          US-A- 4 766 083
US-A- 5 100 805          US-A- 5 589 401

• SYKULEV Y K ET AL: "QUANTITATION OF REVERSIBLE BINDING BY PARTICLE COUNTING HAPTEN-ANTIBODY INTERACTION AS A MODEL SYSTEM" PROCEEDINGS OF THE NATIONAL ACADEMY OF SCIENCES OF THE UNITED STATES OF AMERICA, vol. 89, no. 10, 1992, pages 4703-4707, XP009057840 ISSN: 0027-8424
• MONTAGNE P ET AL: "MICROPARTICLE-ENHANCED NEPHELOMETRIC IMMUNOASSAY WITH MICROSPHERE- ANTIGEN CONJUGATES" BIOCONJUGATE CHEMISTRY, ACS, WASHINGTON, DC, US, vol. 3, no. 2, 1 March 1992 (1992-03-01), pages 187-193, XP000262176 ISSN: 1043-1802

**EP 1 792 183 B1**

**Description**

The present invention relates to a simple and effective method for the quantitative determination of ligand interactions with receptors adsorbed on the particle surface by means of direct light scattering measurement.

More specifically, the present invention relates to a method for the quantitative determination of interactions of ligand with receptors wherein submicrometric polymeric particles, having a diameter between 5 and 200 nm, preferably having particle sizes between 40 and 80 nm, are used.

Several methods have been suggested in the prior art to determine interactions between ligands and receptors, i.e. the binding affinities of ligand-receptor reversible systems of chemical, biochemical or biological interest. A list of the main methods is reported in Angew. Chem. Int. Ed. 1998, 37, page 2785.

Said known methods generally comprise the receptor immobilization on a suitable flat surface and the determination of variations of the properties, for example the optical ones, of said surface after having put it into contact with the ligands, said variations being induced by the formation of receptor-ligand couples.

One class of methods requires the ligand labeling in solution, i.e. the covalent ligand modification with fluorescent, luminescent or radioactive species. See for example the patent application US 2004/0014060 A1.

However the ligand modification is a very complex and long operation and it can hardly be used in screening tests wherein a notable variety of ligands is used. Furthermore the method requires an additional removal operation from the system, by washing out the free ligands, i.e. those which have not interacted with the receptors and which interfere with the measurement.

A further drawback of said method is that the ligand-receptor interaction can be influenced by the chemical modification of the ligand due to the labeling.

Another class of methods which more effectively simulate the receptor-ligand interactions, for example those occurring on a cell membrane surface, is the one which directly utilizes the variations induced on a surface by the bond formation in the receptor-ligand couple without modifying the ligand with labeling substances. An example of said method is the one which uses the BIAcore biosensor, commercialized by Pharmacia Biosensor AB (Uppsala, Sweden) described for example in the patents USP 5,313,264 and USP 5,374,563.

In this biosensor, based on the principle of Surface Plasmon Resonance (SPR) (J.Homola et al. "Surface Plasmon Resonance Sensors: review", Sensor and Actuators B 54 (1999) 3-15), an evanescent optical wave couples with surface plasmons having thin layers (50 nm) of conductor materials such as silver or gold and generates a resonance phenomenon at specific angles. This allows to determine the variation of the refractive index of the layer adsorbed on the metal, for example a ligand-receptor couple. From this variation the binding constants between ligand and receptor are obtained.

Said method, even if often used in practice, is rather complex and expensive and is not always accurate in the determination of the binding constants. See for example the publication "Use of surface plasmon resonance to probe the equilibrium and dynamic aspects of interactions between biological macromolecules", by Peter Schuck, Annu. Rev. Biophys. Biomol. Struct., 1997, 26; pages 541-66. The problems related to the use of the BIAcore method for the binding constant determination depend on:

1) the ligand mass transport which influences the determination;
2) the steric hindrance of the ligand-receptor couple (bulk effect) and the distribution of the binding sites on the sensor, which influence the adsorption and desorption constants. Therefore, not rarely, the association and dissociation constants obtained with this method differ of some orders of magnitude from those drawn by other methods;
3) the fact that the measurements are not taken under thermodynamic equilibrium conditions (kinetic approach).

The article, "QUANTITATION OF REVERSIBLE BINDING BY PARTICLE COUNTING HAPTEN-ANTIBODY INTERACTION AS A MODEL SYSTEM"; Proceedings of the National Academy of Sciences, US, Vol. 89, Nr. 10, pages 4703-4707; 1992; SYKULEV Y K et al discloses a method for measuring intrinsic equilibrium constants for the reversible interactions between two ligands, using an antibody-hapten model system (2,4-dinitrophenyl (DNP) hapten and anti-DNP antibody) based on particle counting of uniform polystyrene spheres of diameter 0.36-0.01 micron to which the hapten DNP is coupled covalently. The microspheres surfaces are first prepared chemically to enable subsequent covalent attachment of DNP-lysine, followed by removal of uncoupled ligand. Thereafter the DNP covered spheres are cross linked with anti-DNP antibody at various concentrations (5-30 microgram / ml). The reaction mixtures are then diluted and injected into a hydrodynamically focused optical flow cell illuminated by focused laser beam for optical pulse particle size analysis to determine the size distribution Cn of the clusters formed by "n" uniform spheres from which a bond parameter "b" representing the average number of cross links per sphere is determined. The binding constant K of a ligand competing with anti-DNP is subsequently determined from a fitting of "b" versus concentration of free ligand H using an equation.

The need was therefore felt to have available a method for the determination of interactions between ligands and receptors directly exploiting the variations induced by the ligand-receptor interaction on a surface, avoiding the ligand labeling and washing operations, and being able to act under thermodynamic equilibrium conditions, avoiding the drawbacks of the kinetic methods such as for example BIAcore.

It has now been surprisingly and unexpectedly found that it is possible to obviate the above mentioned drawbacks with a quantitative optical method which allows to determine the binding affinities of molecular species in thermodynamic equilibrium by means of the method described hereinafter.

It is object of the present invention a method for the determination of the binding constant of two interacting molecular species by means of Laser Light Scattering (LLS), comprising the following steps:

a) addition to a colloidal aqueous suspension or latex containing from 0.05% to - 5% by weight of particles having an average diameter comprised between 5 and 200 nm, constituted by an hydrophobic amorphous polymer having a refractive index $n_p$ comprised between 1.3250 and 1.3400, preferably between 1.3300 and 1.3350 - of a sequence of known volumes of an aqueous solution of a mixture containing from 50% to 99.5% by weight of an amphiphilic non ionic surfactant, or in case ionic as well, and from 0.5 to 50% by weight of the same or of a different surfactant ended with a receptor, measuring after each addition the intensity of the light scattered by the suspension by Laser Light Scattering (LLS) and reporting it on a diagram in connection with the progressively added solution volume, until reaching an asymptotic value $I_r$;

b) addition to the suspension obtained in step a) of a sequence of known volumes of an aqueous solution of ligands, expressing as $[T_0]$ the molar concentration of ligands added to the suspension, measuring after each addition the intensity of the light $I$ scattered by the suspension by Laser Light Scattering (LLS) and reporting it on a diagram in connection with the progressively added solution volume, until reaching an asymptotic value and fitting the scattered light intensity data in connection with the ligand additions using equation 1, said equation being:

$$I = I_0 \left( \sqrt{\frac{I_r}{I_0}} + \frac{m_l\left(n_l^2 - n_w^2\right)\left([T_0] + K^{-1} + [S_0] - \sqrt{\left([T_0] + K^{-1} + [S_0]\right)^2 - 4[T_0][S_0]}\right)}{2\rho_l\left(n_p^2 - n_w^2\right)\phi_p} \right)^2 \qquad (1)$$

where $I_0$ is the intensity of light scattered by uncovered particles, $n_w$ is the solvent refractive index, $n_l$ is the refractive index of ligands, $\phi_p$ is the fraction of suspension volume occupied by the particles, $\rho_l$ is the density of pure ligand, $m_l$ is the molecular weight of ligand molecule, $[S_0]$ is the total molar concentration of ligand-receptor interaction sites and K is the binding constant.

Equation 1, used to fit the data of scattered light intensity in connection with the ligand additions, is derived by the Rayleigh model for the intensity of light scattered by particles much smaller than the wavelength (see for example "Light Scattering by Small Particles" H.C. van de Hulst, Dover Publications, Inc. New York) and by a function known as "Langmuir isotherm" which states the ligand amount bound to the receptor in connection with the added ligand amount $[T_0]$, the receptor concentration $[S_0]$ and the affinity constant $K$ (see for example "Principles of Colloid and Surface Chemistry", P.C. Hiemenz, Marcel Dekker Inc.). Since the other magnitudes involved are known, from fitting it is possible to draw the concentration of receptor adsorbed on the particles surface $[S_0]$ and the affinity constant $K$ for the ligand-receptor interaction.

The amorphous hydrophobic polymer can be, for example, a perfluoropolymer.

As amphiphilic surfactants those generating a self assembled monolayer on the latex particles are used. The obtainment of said monolayer can be achieved by carrying out the step a) of the present method by using only the non ionic, or in case ionic as well, surfactant in place of its mixture with the surfactant ended with the receptor and observing the reaching of an asymptotic value of the diagram.

Furthermore said non functionalized surfactants must not have specific interactions, i.e. they must not form a bond with the ligand to be analyzed. The absence of such inter-action can be verified by carrying out the first step of the method according to the invention by using only the surfactant and not the mixture, and following step b), verifying that there are no variations of the scattered light intensity.

According to the invention, non ionic surfactants (either glycolipids or surfactants of the family of oxyethylenes (brij)) can be used either as molecules carrying the sites acting as receptors or as "spacers" non interacting on the particle surface; otherwise ionic surfactants can be used, too: for example anionic, like bis(2-ethylhexyl) sulfosuccinate sodium salt (AOT, produced by Sigma), or cationic, like didecyldimethylammonium bromide (DDAB, produced by Sigma as well).

Among non ionic surfactants usable in the present invention it can be mentioned for example:

a) non ionic compounds having structure

$$CH_3\text{-}(CH_2)_n\text{-}(OCH_2CH_2)_mOH$$

wherein 6<n< 18 and 3 <m< 12
for example the commercial compound Brij 56 (Fluxa, cas. No. 9004-95-9) wherein n = 15 and m is distributed around the value m = 10;
b) alkyl glycosides with the following structure

$$RO\text{-}(CH_2)_n\text{-}CH_3$$

wherein 6<n<12 and R = glucose or maltose residue, for example the commercial compound n-dodecyl-beta-D-maltoside by Aldrich.
The amphiphilic surfactants ended with a receptor are prepared by reaction of the above described surfactants with receptors according to known prior art processes.
The receptor-ligand couple is defined as a molecule couple, for example proteins, nucleic acids, glycoproteins, carbohydrates, hormones, having an affinity suitable to produce a more or less stable bond. In particular antibody/antigen, enzyme/inhibitor, carbohydrate/carbohydrate, protein/DNA, DNA/DNA, peptide/peptide, can be mentioned.
In steps a) and b) of the method according to the invention the measurements of the scattered light intensities are carried out under thermodynamic equilibrium conditions, i.e. alternating the additions with periods of time, generally 4-6 minutes, in order to allow the suspension to stabilize.
It has been found that the invention system quickly reaches the thermodynamic equilibrium. Therefore the measurements carried out are independent from the absorption-desorption kinetics and thus are not influenced anyway by the bulk transport.
The configuration of the colloidal system with submicrometric particles makes available a larger surface in comparison with the systems which utilize flat surfaces, a solution volume being fixed. Generally, the diameter of the polymer particles and the concentration of the colloidal aqueous suspension of polymer are chosen in order to have an available surface per milliliter of suspension comprised between 500 and 2000 cm$^2$.
The method of the present invention allows to detect up to 3 micrograms of material per milliliter, corresponding to a sensitivity limit on the adsorbed mass per surface of 0.04 nanograms/mm$^2$ which is in the range of the most sensitive techniques of the prior art.
It is surprising and unexpected that the scattering of light (LS) has resulted effective to identify and measure interactions between receptors and ligands according to the method of the present invention. In fact, the interaction of ligands with receptors in diluted solutions is not measurable by LS.
On the contrary the use of submicrometric particles which support a multiplicity of receptors allows to use LS to determine the ligand-receptor interaction.
It is necessary to note that the presence of interactions between a ligand and more receptors carried by different particles (indicated herein as polyvalent interactions) makes the present invention method inapplicable. In the case of several polyvalent interactions one can reach the latex coagulation. The existence of said polyvalent interactions can be verified by determining the particle size during steps a) and b) by the Dynamic Laser Light Scattering (DLLS) technique. The DLLS method is based on the registration of a curve which binds the scattering intensity and the release time of the scattering articles. It is thus possible to draw a release rate r, which is proportional to the scattering coefficient D of the scattering species:

$$\Gamma = D * q^2$$

wherein q represents the wave vector which is expressed as follows:

$$q = (4\pi n/\lambda)\sin(\theta/2)$$

wherein n is the medium refraction index, λ is the wave length and θ is the scattering angle at which the measurements are carried out.

The scattering coefficient D is related to the diameter of the present scattering articles by the Stokes-Einstein equation:

$$D=kT/3\pi\eta\phi$$

wherein K is the Boltzmann constant, T the temperature, $\eta$ the medium viscosity and $\phi$ the diameter of the scattering articles. Therefore from this equation the particle diameter can be drawn. In absence of polyvalent interactions the polymeric particle diameter remains substantially constant. The diameter variation is due to the monomolecular layer formed by the surfactant, by the receptor and by the ligand.

The control of diameter variation is particularly important when there is no system coagulation, even if polyvalent interactions are present. In this case, indeed, the obtained measurements would not be significant of the ligand-receptor interactions.

Therefore the interactions which must take place between receptor and ligand must not be polyvalent interactions. The diameter variation for interactions which are not polyvalent is of the order of few nanometers for supporting polymer particles of about 40 nm. There are, instead, polyvalent interactions when, for example, particles of 80 nm are detected using supporting particles of 40 nm.

Some Examples are given for illustrative but not limitative purposes of the present invention.

## EXAMPLES

### EXAMPLE 1

Determination of the binding constant between Vancomycin hydrochloride hydrate (ligand) and the peptide sequence L-Lys-D-Ala-D-Ala (receptor)

**Step a)**

To a colloidal aqueous suspension containing 0.1 % by weight of submicrometric particles having an average diameter of 78 nm, constituted by a TFE copolymer containing 40% by moles of perfluoromethylvinylether, it was added a 10 millimolar aqueous solution of a mixture containing 99% by weight of n-dodecyl-beta-D-maltoside and 1% by weight of the non ionic surfactant Brij 56 ended with the peptide sequence L-Lys-D-Ala-D-Ala, sequence characteristic of the bacterium cellular wall, each in 6 microliter portions, at intervals of 5 min.

After each addition the mixture was stirred for 30 seconds and let balance for 1 minute, and the scattering light intensity was measured by using a 5 milliWatt He-Ne laser and a photomultiplier to convert the scattered light into an electric signal.

The light intensity was recorded for 10 seconds for consecutive six times thus selecting the lowest value in order to minimize the noise due to the possible presence of powder in the sample.

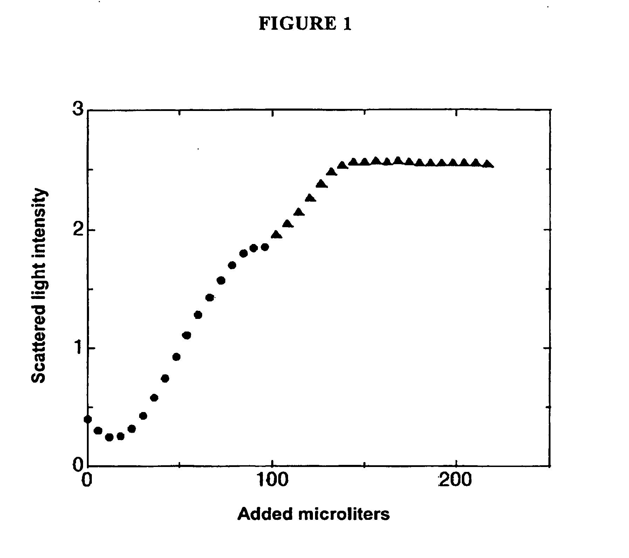

The measured intensity values (spots in Fig. 1) are represented as a diagram in connection with the added solution volumes obtaining the curve reported in Fig. 1.

The progressive particle covering by the used mixture is monitored by the variation of the scattered light intensity.

The complete coating is clearly shown by the achievement of an asymptotic value of the scattered light intensity.

**Step b)**

To the suspension obtained in a), when the asymptotic value is reached, a 0.4 millimole aqueous solution of Vancomycin hydrochloride hydrate (commercialized by Aldrich, cas. No. 861987) is added, each in 6 microliter portions, at intervals of 5 minutes.

After each addition the mixture was stirred for 30 seconds and let balance for 1 minute, and the scattered light intensity was measured as in step a).

The measured intensity values (triangles in Fig. 1) are represented as a diagram in connection with the solution volumes and added to the curve diagrammed in step a).

The formation of the Vancomycin/L-Lys-D-Ala-D-Ala couples is detected from the increase of the scattered light intensity until reaching an asymptotic value which indicates the saturation of the receptor sites with Vancomycin.

By fitting the Langmuir absorption formula to the scattered light intensity data, in connection with the Vancomycin additions, the receptor-ligand binding constant is obtained.

The obtained binding constant is 1.5 x$10^6$ moles$^{-1}$.

In order to verify the absence of aggregation processes, the diameter of the submicrometric particles was continuously checked by means of the DLLS method and, substantially, it remained constant.

EXAMPLE 2

The Example 1 was repeated but using an aqueous colloidal suspension at 0.1 % of particles having an average diameter of 40 nm, constituted by a TFE copolymer containing 30% by moles of 2,2,4-trifluoro-5-trifluoromethoxy-1,3-dioxole (TTD).

In step a) the same mixture of the Example 1 was added in 12 microliter portions.

In step b) a 0.9 millimolar mixture of Vancomycin was added in 6 microliter portions.

The obtained binding constant is 1.1 x$10^6$ moles$^{-1}$.

**Claims**

1. Method for the determination of the binding constant of two interacting molecular species by means of Laser Light Scattering (LLS), comprising the following steps:

   a) addition to a colloidal aqueous suspension or latex containing from 0.05% to 5% by weight of particles having an average diameter comprised between 5 and 200 nm, constituted by an hydrophobic amorphous polymer having a refractive index $n_p$ comprised between 1.3250 and 1.3400, preferably between 1.3300 and 1.3350 - of a sequence of known volumes of an aqueous solution of a mixture containing from 50% to 99.5% by weight of an amphiphilic non ionic surfactant, or in case ionic as well, and from 0.5 to 50% by weight of the same or of a different surfactant ended with a receptor, measuring after each addition the intensity of the light scattered by the suspension by Laser Light Scattering (LLS) and reporting it on a diagram in connection with the progressively added solution volume, until reaching an asymptotic value $I_r$;
   b) addition to the suspension obtained in step a) of a sequence of known volumes of an aqueous solution of ligands, expressing as $[T_0]$ the molar concentration of ligands added to the suspension, measuring after each addition the intensity I of the light scattered by the suspension by Laser Light Scattering (LLS) and reporting it on a diagram in connection with the progressively added solution volume, until reaching an asymptotic value and fitting the scattered light intensity data in connection with the ligand additions using equation 1, said equation being:

$$I = I_0 \left( \sqrt{\frac{I_r}{I_0}} + \frac{m_l \left( n_l^2 - n_w^2 \right) \left( [T_0] + K^{-1} + [S_0] - \sqrt{\left( [T_0] + K^{-1} + [S_0] \right)^2 - 4[T_0][S_0]} \right)}{2\rho_l \left( n_p^2 - n_w^2 \right) \phi_p} \right)^2 \qquad (1)$$

where $I_0$ is the intensity of light scattered by uncovered particles, $n_w$ is the solvent refractive index, $n_l$ is the refractive index of ligands, $\phi_p$ is the fraction of suspension volume occupied by the particles, $\rho_l$ is the density of pure ligand, $m_l$ is the molecular weight of ligand molecule, $[S_0]$ is the total molar concentration of ligand-receptor interaction sites and $K$ is the binding constant.

2. Method according to claim 1 wherein the non ionic, or ionic, amphiphilic surfactants are surfactants which produce a monolayer (self assembled monolayer) on the polymer particles.

3. Method according to either one of claims 1-2 wherein the non ionic surfactants are chosen among:

   a) non ionic compounds having the structure

   $$CH_3-(CH_2)_n-(OCH_2CH_2)_mOH$$

   where 6<n<18 and 3<m<12
   b) alkyl glycosides with the following structure

$$RO\text{-}(CH_2)_n\text{-}CH_3$$

where 6<n< 12 and R = glucose or maltose residue.

4. Method according to any one of claims 1-3 wherein the ligand-receptor couple is chosen among proteins, nucleic acids, glycoproteins, carbohydrates, hormones.

5. Method according to claim 4 wherein the ligand-receptor couple of molecules is chosen among antibody/antigen, enzyme/inhibitor, carbohydrate/carbohydrate, protein/DNA, DNA/DNA, peptide/peptide.

6. Method according to any one of claims 1-5 wherein the diameter of the polymer particles and the concentration of the colloidal aqueous suspension of polymer are chosen in order to have an available surface per milliliter of suspension comprised between 500 and 2000 $cm^2$.

**Patentansprüche**

1. Verfahren für die Bestimmung der Bindungskonstante von zwei miteinander interagierenden molekularen Spezien mittels Laserlicht-Diffusion (LLS), umfassen die folgenden Schritte:

   a) Zugabe zu einer kolloidalen wässrigen Suspension oder eines Latex, enthaltend von 0,05 bis 5 Gew.-% Partikel mit einem mittleren Durchmesser zwischen 5 und 200 nm, welche durch ein hydrophobes amorphes Polymer mit einem Brechungsindex $n_\rho$ zwischen 1,3250 und 1,3400, vorzugsweise zwischen 1,3300 und 1,3350, gebildet werden, in einer Sequenz von bekannten Volumen einer wässrigen Lösung einer Mischung, enthaltend von 50 bis 99,5 Gew.-% eines amphiphilen nicht-ionischen Tensids oder eines ionischen Tensids und von 0.5 bis 50 Gew.-% desselben oder eines verschiedenen Tensids, welches mit einem Rezeptor endet, wobei nach jeder Zugabe die Intensität des Lichtes gemessen wird, welches durch die Suspension durch die Laserlicht-Diffusion (LLS) gebrochen wird, und dessen Weiterleiten in ein Diagramm, welches in Korrelation steht mit dem fortschreitend zugegebenem Lösungsvolumen, bis ein asymptotischer Wert h erreicht wird;
   b) Zugabe zu der in Schritt a) erhaltenen Suspension von einer Sequenz von bekannten Volumen einer wässrigen Lösung von Liganden, wobei als $[T_0]$ die molare Konzentration an Liganden, welche zu der Suspension gegeben werden, ausgedrückt wird. Messen der Intensität I des Lichtes, welches durch die Suspension durch die Laserlicht-Diffusion (LLS) gebrochen wird, und dessen Weiterleiten in ein Diagramm, welches in Korrelation steht mit dem fortschreitend zugegebenen Lösungsvolumen, bis ein asymptotischer Wert erreicht ist und Bestimmen der gebeugten Lichtintensildtsdaten in Zusammenhang mit den Ligandenzugaben unter Verwendung der Gleichung 1, wobei die Gleichung lautet:

$$I = I_0 \left( \sqrt{\frac{I_r}{I_0}} + \frac{m_i\left(n_i^2 - n_w^2\right)\left([T_0] + K^{-1} + [S_0] - \sqrt{\left([T_0] + K^{-1} + [S_0]\right)^2 - 4[T_0][S_0]}\right)}{2\rho_i\left(n_\rho^2 - n_w^2\right)\phi_\rho} \right)^2 \tag{1}$$

worin $I_0$ der Lichtintensität entspricht, welche durch unbeschichtete Teilchen gebeugt wird, $n_w$ dem Brechungsindex des Lösemittels entspricht, $n_i$ dem Brechungsindex der Liganden entspricht, $\phi_\rho$ dem Anteil des Suspensionsvolumens entspricht, welches durch die Partikel belegt ist, $\rho_i$ der Dichte des reinen Liganden entspricht, $m_i$ dem molekularen Gewicht des Ligandmoleküls entspricht, $[S_0]$ der molaren Gesamtkonzentration an Wechseiwirkungsseiten von Ligand und Rezeptor entspricht und K die Bindungskonstante ist.

2. Verfahren nach Anspruch 1, worin die nicht-ionischen oder ionischen amphiphilen Tenside Tenside sind, welche eine Einzelschicht (selbstorganisierende Einzelschicht) auf den Polymerartikel erzeugen.

3. Verfahren nach Anspruch 1 oder 2, worin die nicht-ionischen Tenside ausgewählt werden unter:

   a) nicht-ionischen Verbindungen mit der Struktur

$$CH_3\text{-}(CH_2)n\text{-}(OCH_2CH_2)mOH,$$

worin 6 < n < 18 und 3 < m < 12 ist,
b) Alkyl-Gtykoside mit der folgenden Struktur

$$RO\text{-}(CH_2)n\text{-}\ CH_3.$$

worin 6 < n 12 und R einem Glukose- oder Maltoserest entspricht.

4. Verfahren nach einem der Ansprüche 1 bis 3, worin das Ligand- Rezeptor-Paar ausgewählt ist aus Proteinen, Nucleinsäuren, Glykoproteinen, Kohlenhydraten und Hormonen.

5. Verfahren nach Anspruch 4, worin das Ligand-Rezeptor-Paar von Molekülen ausgewählt aus Antikörper/Antigen, Enzym/Inhibitor, Kohlenhydrat/Kohlenhydrat. Protein/DNA, DNA/DANN und Peptid/Peptid.

6. Verfahren nach einem der Ansprüche 1 bis 5, worin der Durchmesser der Polymerpartikel und die Konzentration der kollodialen wässrigen Suspension des Polymers ausgewählt werden, um eine verfügbare Oberfläche pro Milliliter der Suspension zwischen 500 und 2000 $cm^2$ zu erhalten.

**Revendications**

1. Procédé de détermination de la constante de liaison de deux espèces moléculaires interagissantes au moyen de la diffusion de lumière laser (LLS), comprenant les étapes suivantes :

   a) l'addition à une suspension aqueuse colloïdale ou de latex contenant de 0,05 % à 5 % en poids de particules ayant un diamètre moyen compris entre 5 et 200 nm, constituée d'un polymère amorphe hydrophobe ayant un indice de réfraction $n_p$ compris entre 1,3250 et 1,3400, de préférence entre 1,3300 et 1,3350 - d'une séquence de volumes connus d'une solution aqueuse d'un mélange contenant de 50 % à 99,5 % en poids d'un tensioactif non ionique amphiphile, ou, le cas échéant, tout aussi bien ionique, et de 0,5 à 50 % en poids du même tensioactif ou d'un tensioactif différent terminé par un récepteur, la mesure après chaque addition de l'intensité de la lumière diffusée par la suspension par diffusion de lumière laser (LLS) et le report de celle-ci sur un diagramme en relation avec le volume de solution progressivement ajoutée, jusqu'à l'atteinte d'une valeur asymptotique $I_f$;
   b) l'addition à la suspension obtenue dans l'étape a) d'une séquence de volumes connus d'une solution aqueuse de ligands, l'expression sous la forme de la concentration molaire $[T_0]$ des ligands ajoutés à la suspension, la mesure après chaque addition de l'intensité $1$ de la lumière diffusée par la suspension par diffusion de lumière laser (LLS) et le report de celle-ci sur un diagramme en relation avec le volume de solution progressivement ajoutée, jusqu'à l'atteinte d'une valeur asymptotique et l'ajustement des données d'intensité de la lumière diffusée en relation avec les additions de ligand en utilisant l'équation 1, ladite équation étant :

$$I = I_0 \left( \sqrt{\frac{I_f}{I_0}} + \frac{m_l\left(n_l^2 - n_w^2\right)\left([T_0] + K^{-1} + [S_0] - \sqrt{\left([T_0] + K^{-1} + [S_0]\right)^2 - 4[T_0][S_0]}\right)}{2\rho_l\left(n_p^2 - n_w^2\right)\phi_p} \right)^2 \tag{1}$$

où $I_0$ est l'intensité de la lumière diffusée par les particules non couvertes, $n_w$ est l'indice de réfraction du solvant, $n_l$ est l'indice de réfraction des ligands, $\phi_p$ est la fraction du volume de la suspension occupée par les particules, $\rho_l$ est la densité du ligand pur, $m_l$ est le poids moléculaire de la molécule de ligand, $[S_0]$ est la concentration molaire totale des sites d'interaction ligand-récepteur et K est la constante de liaison.

2. Procédé selon la revendication 1, dans lequel les tensioactifs amphiphiles non ioniques ou ioniques sont des tensioactifs qui produisent une monocouche (monocouche auto-assemblée) sur les particules de polymère.

3. Procédé selon l'une quelconque des revendications 1 à 2, dans lequel les tensioactifs non ioniques sont choisis parmi :

a) les composés non ioniques ayant la structure

$$CH_3\text{-}(CH_2)n\text{-}(OCH_2CH_2)mOH$$

où 6< n < 18 et 3<m <12

b) des glycosides alkylés avec la structure suivante

$$RO\text{-}(CH_2)n\text{-}CH_3$$

où 6 <n<12 et R = résidu de glucose ou de maltose.

4. Procédé selon l'une quelconque des revendications 1 à 3, dans lequel le couple ligand-récepteur est choisi parmi les protéines, les acides nucléiques, les glycoprotéines, les hydrates de carbone, les hormones.

5. Procédé selon la revendication 4, dans lequel le couple ligand-récepteur des molécules est choisi parmi le couple anticorps/antigène, enzyme/inhibiteur, hydrate de carbone/hydrate de carbone, protéine/ADN, ADN/ADN, peptide/peptide.

6. Procédé selon l'une quelconque des revendications 1 à 5, dans lequel le diamètre des particules de polymère et la concentration de la suspension aqueuse colloïdale du polymère sont choisis afin d'avoir une surface disponible par millimètre de suspension comprise entre 500 et 2 000 cm$^2$.

**FIGURE 1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20040014060 A1
- US 5313264 A

- US 5374563 A

### Non-patent literature cited in the description

- *Angew. Chem. Int. Ed,* 1998, vol. 37, 2785
- **J.HOMOLA et al.** Surface Plasmon Resonance Sensors: review. *Sensor and Actuators B,* 1999, vol. 54, 3-15
- **PETER SCHUCK.** Use of surface plasmon resonance to probe the equilibrium and dynamic aspects of interactions between biological macromolecules. *Annu. Rev. Biophys. Biomol. Struct,* 1997, vol. 26, 541-66

- **SYKULEV Y K.** QUANTITATION OF REVERSIBLE BINDING BY PARTICLE COUNTING HAPTEN-ANTIBODY INTERACTION AS A MODEL SYSTEM. *Proceedings of the National Academy of Sciences,* 1992, vol. 89 (10), 4703-4707